(19) Europäisches Patentamt
European Patent Office
Office européen des brevets

(11) Publication number: 0 094 983
B1

(12) EUROPEAN PATENT SPECIFICATION

(45) Date of publication of patent specification: 13.12.89

(21) Application number: 82104599.4

(22) Date of filing: 26.05.82

(51) Int. Cl.$^4$: C 01 F 7/00, C 01 G 3/00, C 01 G 9/00, C 01 G 45/00, C 01 G 49/00, C 01 G 51/00, C 01 G 53/00, C 07 F 5/06, C 01 B 25/45, B 01 J 39/08, C 01 G 37/14

# (54) Process for removing transition metal ions from an aqueous solution with a reticular ion exchange resin containing a crystalline transition metal aluminate.

(43) Date of publication of application:
30.11.83 Bulletin 83/48

(45) Publication of the grant of the patent:
13.12.89 Bulletin 89/50

(84) Designated Contracting States:
BE DE FR GB

(56) References cited:
WO-A-82/00820
US-A-2 208 173
US-A-4 326 961
US-A-4 333 846

(73) Proprietor: THE DOW CHEMICAL COMPANY
2030 Dow Center Abbott Road P.O. Box 1967
Midland Michigan 48640-1967 (US)

(72) Inventor: Lee, John Malcolm
123 Aster Lane
Lake Jackson Texas (US)
Inventor: Bauman, William Carrel
440 Highway 332
Lake Jackson Texas (US)

(74) Representative: Casalonga, Axel et al
BUREAU D.A. CASALONGA - JOSSE
Morassistrasse 8
D-8000 München 5 (DE)

EP 0 094 983 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for removing transition metal ions from an aqueous solution with the aid of a reticular ion exchange resin containing a crystalline transition metal aluminate.

It is disclosed in U.S. Patents 4,116,858 and U.S. 4,159,311 (both by Bauman and Lee) that novel crystalline compounds are formed, especially in certain reticular ion exchange resins, by contacting aqueous solutions of Li halides with hydrous alumina, $Al(OH)_3$, to form $LiX \cdot 2Al(OH)_3$ crystals, where X is halide, which are useful in selectively removing Li ions from aqueous solutions. Preparation of $LiOH \cdot 2Al(OH)_3$ is also disclosed.

In U.S. Patents 4,116,857 and U.S. 4,183,900 (both by Bauman and Lee) it is disclosed that $MgX_2 \cdot 2Al(OH)_3$, where X is halide, is prepared by reacting Mg halide with hydrous alumina in an ion exchange resin and that the so-formed aluminate is useful in selectively removing Mg ions from aqueous solution.

Maksimovic, in Compt. Rend. Soc. Serbe Geol. Ann 1955, reported on x-ray diffraction studies of Takovite, a natural mineral from Takova, Serbia which he identified as nickel aluminum oxide hydroxide hydrate, $Ni_5Al_4O_2(OH)_{18} \cdot 6H_2O$.

Galezot, in Compt. Rend. *268B*, 323—31 (1969), reported on x-ray diffraction studies of hexagonal nickel aluminum oxide hydrate, identified as $Ni_5Al_4O_{11} \cdot 18H_2O$ and as $2Al_2O_3 \cdot 5NiO \cdot 18H_2O$.

It has been found, unexpectedly, that novel and useful transition metal aluminates are formed by reacting compounds of certain transition metals with hydrous alumina, e.g. $Al(OH)_3$, to form certain transition metal aluminates which are crystallizable by heating. The aluminates so-formed are useful, e.g., as ion exchangers and as precursors to spinels among other things; they may be supported by a substrate or may be unsupported.

The present invention relates to a process for removing transition metal ions from an aqueous solution, said transition metal ions being selected from the group consisting of Cu, Zn, Mn, Fe, Co and Ni, said process comprising: reacting said aqueous solution with a reticular ion exchange resin having incorporated therein a crystalline transition metal aluminate conforming generally to the formula:

$$MA_a^vZ_b^v nAl(OH)_3 \cdot mH_2O$$

where M is at least one divalent transition metal and is a metal sought to be recovered from said solution, selected from the group comprising Cu, Zn, Mn, Fe, Co, and Ni, where A and Z represent negative valence ions or radicals, v is a negative valence of 1, 2, or 3, a and b are each values of from zero to 2, with (va)+(vb) equal to 2, and m is an integer in the range of zero to maximum for waters of hydration, said transition metal aluminate being initially deficient in said transition metal ion such that n, the ratio of Al/M, is initially 2 or greater but not exceeding 4; and continuing said reaction until said transition metal aluminate has become substantially enriched by transition metal ions identical to those originally incorporated in said resin from said aqueous solution, such that n is less than two.

The invention is especially concerned with the afore-mentioned process, it further comprising: separating said ion exchange resin incorporating said transition metal aluminate from said aqueous solution; and washing said resin with a solution that dissolves said transition metal ions from said aluminate such that n is greater than 2 but less than 4.

US—A—4 326 961 which is believed to form the closest prior art, discloses the recovery of Mg from Mg brines using crystalline Mg-aluminate embedded in a reticular resin. The highest disclosed ratio between Al and Mg in the starting crystalline Mg-aluminate is 2:1. This reference does not teach or disclose the use of other crystalline metal aluminates (embedded in a reticular resin) for the recovery of other metals. Especially no transition metals are mentioned let alone the presently claimed high ratio between Al and the transition metal M.

WO—A—82/00820 relates to a Mg-Al spinel, its preparation and its use in slipcasting compositions. The reference does not teach, disclose or suggest the possible application of the Mg-Al spinel or its intermediate product for the recovery of Mg ions or of any other metal ions—let alone transition metal ions.

The present invention also embraces a process for removing transition metal ions from aqueous solution, such as mentioned hereinbefore, whereby the transition metal aluminate containing reticular ion exchange resin is prepared by the following steps: preparing in the presence of said reticular ion exchange resin a solution of an Al salt; increasing the pH of this solution by adding a non-interfering base in order to get amorphous hydrous alumina; mixing the amorphous hydrous alumina in the alkaline aqueous medium with the requisite transition metal compound, thus forming an adduct of the transition metal compound with the amorphous hydrous alumina, $Al(OH)_3$, such that the ratio of Al/M is between 2 and 4; heating the so-formed adduct to crystallization at a temperature in the range of 50°C to 150°C for a period of time from 1 hour to 100 hours; and recovering the so-formed reticular ion exchange resin with the incorporated transition metal aluminate.

The transition metals within the purview of this invention comprise one or more of the group comprising Cu, Zn, Mn, Fe, Co, and Ni, all in their divalent form. The starting transition metal compounds are referred to herein as "MAZ" compounds, where M is the transition metal and A and Z represent the negative radical(s) or anion(s). Each "A" and "Z" may be the same as, or different from, the other.

The hydrous aluminas within the scope of this invention are amorphous and conform essentially to the formula $Al(OH)_3$ along with whatever waters of hydration are present. The waters of hydration will depend, to some extent, on the methods of preparation and the pH, temperature, and environment in which the hydrous alumina is formed or dispersed. Preferably the amorphous hydrous alumina is freshly formed in aqueous medium by precipitation of a dissolved Al compound, such as $AlCl_3$, by the action of a non-interfering transient base, such as $NH_3$. Other bases, e.g. alkali metal hydroxide, or alkaline earth metal hydroxides form corresponding aluminates which are not directly useful in forming the aluminates of the present invention. Crystalline $Al(OH)_3$, e.g., Gibbsite, Bayerite, or Norstrandite, is usually converted to Boehmite (crystalline AlOOH) when heated.

The amorphous $Al(OH)_3$ may be a neat (unsupported) dispersion of the $Al(OH)_3$ in aqueous medium or may be supported on and/or within a substrate. Non-porous or reticular inorganic or organic substrates may be used to support the $Al(OH)_3$, so long as the substrates do not substantially interfere with the desired formation of the subject crystalline aluminates. The precipitated $Al(OH)_3$ is usually a suspension of small gel particles.

There are, of course, substrates which permit the formation of the crystalline transition metal aluminates, but which offer certain reactivities of their own during subsequent use of the said supported crystalline aluminates, such as ion exchange resin substrates. If it is desired to heat the supported aluminate to very high temperature, then the choice of substrates is considerably narrowed. The subject aluminates are generally prepared in situ on the substrate when a substrate is used, but may also be prepared as an aqueous dispersion and then deposited on or within a substrate.

As mentioned, supra, it is preferred that the amorphous $Al(OH)_3$ be freshly prepared, such as by precipitating $Al(OH)_3$ by the action of $NH_3$ or $NH_4OH$ on a solution of an Al salt, such as $AlCl_3$. Contacting of the MAZ compound with the $Al(OH)_3$ may be done simultaneously with, or subsequent to, the $Al(OH)_3$ formation. Since elevated temperature and/or long periods of standing can cause the $Al(OH)_3$ to become at least partially crystallized to forms such as Boehmite or Norstrandite, it is best to avoid using elevated temperatures until the MAZ has been added to the $Al(OH)_3$. After the MAZ compound has been mixed with the $Al(OH)_3$ to form an adduct, the adduct is then heated to crystallize it to the subject $MA_a^vZ_b^v \cdot nAl(OH)_3 \cdot mH_2O$. The following descriptions generally illustrate the preparations.

Preparation of unsupported aluminates

An alkaline aqueous dispersion of hydrous alumina (which is preferably freshly prepared) is mixed well with at least one MAZ compound to form an adduct or complex which, when heated to a temperature in the range of about 50°C to about 150°C for a period of time of from about 1 hour to about 100 hours, yields the subject crystalline $MA_a^vZ_b^v \cdot nAl(OH)_3 \cdot mH_2O$ compounds. The average particle size of the neatly prepared (i.e. unsupported) crystals is generally in the range of about 0.01 microns to about 1 micron, probably depending somewhat on the alkalinity and/or other surfactants or micelles in the aqueous solution.

Preparation of aluminates on inert, non-porous substrates

Hydrous alumina is precipitated in aqueous medium onto the surfaces of substantially inert, non-porous substrates or is mixed with said substrates in aqueous medium and reacted with at least one MAZ compound in the aqueous medium to form the subject crystalline compounds. By "non-porous" it is meant here that there are no pores visible to the naked eye, though the surface as viewed under high magnification is likely to appear rough or irregular. Surfaces which appear mirror-smooth, even under magnification, are not likely to hold well to an appreciable amount of the coating. The affinity of the surfaces of the substrate for receiving the reactant compounds (hydrous alumina and MAZ compounds) may be enhanced or improved by roughening the surfaces. The substrates may be organic (e.g. polymers) or inorganic (e.g. stable oxides), or metallic (e.g. metal particles, screens, or sheets). Natural or resinous type substrates (e.g. cellulosic, wood, etc.) may be used as the substrate. Mixing of said hydrous alumina and MAZ compounds in a substrate-containing aqueous medium in a ball-mill, tumbler or other mixing device is contemplated, said mixing being done prior, during, or subsequent to the step of heating to obtain the subject crystals.

Preparation of aluminates on inert, reticular substrates

The use of substantially inert, reticular substrates is contemplated. Such substrates are employed in substantially the same manner as with the non-porous substrates. The term "reticular" is used herein to refer to the presence of holes, voids, channels, cracks, indentations or other physical features which permit the reactant compounds to enter the physical structure of the substrate rather than merely coat the outer surfaces. For optimum penetration into the substrate, it is best if substrate imbibes an aqueous solution of a soluble Al compound (e.g. $AlCl_3$) before the pH is increased (e.g. with $NH_3$ or $NH_4OH$) to precipitate hydrous alumina ($Al(OH)_3$). The soluble MAZ compound may then also penetrate the substrate to substantially react with the $Al(OH)_3$ and, upon heating, the subject crystals are formed in and on the substrate.

Preparation of aluminates in reticular ion exchange resins

The use of reticular ion exchange resins as substrates is carried out in substantially the same manner

as with other reticular substrates, including the optimum loading of the crystals on and into the exchange resin by the in situ precipitation of hydrous alumina from a soluble Al compound that has permeated the resin. The ion exchange resin may be substantially of the anionic or cationic, or mixed cation-anion variety. Once the subject crystals are formed on or within the ion exchange resin one may use the composite to alternately or simultaneously, utilize the ion exchange capabilities of the subject aluminate crystals and of the resin.

The MAZ compounds

The anions or negative radicals which may be employed as a compound with the transition metal to form the subject aluminates, $MAZ \cdot nAl(OH)_3$, may have a valence of 1, 2, or 3. The transition metal compound is preferably water-soluble and/or alkali soluble, but may also be a compound which, when added to alkaline water, will react to form water-soluble compounds. Transition metal compounds containing more than one of the subject transition metals may be used. The AZ may represent two monovalent ions or radicals or one divalent ion or radical or two-thirds of a trivalent ion or radical.

Examples of monovalent, divalent, and trivalent anions and negative radicals contemplated for the present invention to be used in the generic formula $MA^v_aZ^v_b \cdot nAl(OH)_3 \cdot mH_2O$ are as follows:

- halide$^-$ (esp. $Cl^-$, $Br^-$, $I^-$),
- hydroxy$^-$ ($OH^-$),
- dihydrophosphate$^-$ ($H_2PO_4^-$),
- sulfate$^{--}$ ($SO_4^{--}$),
- hydrocarbonic$^-$ ($HCO_3^-$),
- hydrophosphate$^{--}$ ($HPO_4^{--}$),
- nitrate$^-$ ($NO_3^-$),
- chromate$^-$ ($HCrO_4^-$),
- trichloroacetic$^-$ ($Cl_3C\text{-}COO^-$),
- other inorganic acid radicals and organic acid radicals of monobasic, dibasic, and tribasic carboxylic acids having 1 to about 8 carbon atoms, with the valence of 1, 2, or 3 corresponding to the number of carboxyl groups present in the organic acid moiety.

In the generic formula $MA^v_aZ^v_b \cdot nAl(OH)_3 \cdot mH_2O$ the value of n should be enough to provide a mole ratio of Al/M of at least about 2/1. At Al/M ratios of less than 1/1 in the process of preparing the crystalline subject aluminates, other forms of crystals may be formed which are not part of the present invention. During the formation process to obtain the desired crystals, it is therefore best if the Al/M ratio is at least about 1/1, preferably about 1.5/1 to about 2/1. Once the crystal is formed, the MAZ portion of the aluminate may be substantially depleted by use of an aqueous elution step without destroying the aluminate crystal, so long as there remains enough of the MAZ moiety present within the three-layered structure to retain integrity of the crystal. Generally, one may substantially retain the three-layered hexagonal expanded crystal structure so long as there remains enough MAZ moiety so that the Al/M ratio does not exceed about 4/1. When the crystal structure has a reduced amount of MAZ moiety, there is available space within the three-layers of the unit cell of the hexagonal crystal lattice to take up additional MAZ moieties until the crystal becomes essentially packed or loaded at an Al/M ratio in the range of about 1.5/1 to 2/1. The three layers of the unit cell comprise three layers of the $Al(OH)_3$ complexed with intercalated layers of the MAZ moiety. The unit cell layered structure may be graphically illustrated for discussion purposes as:

Al-O
MAZ
Al-O
MAZ
Al-O
MAZ

Also in the above generic formula the value of m for the waters of hydration may be from zero (when the crystal has been dehydrated by heating) to as much as 6 or more depending on the particular MAZ moiety in the crystal and on the temperature, pH, and conditions of the preparation. Though there may be more than 6 waters of hydration in the crystal, it is believed that most of the crystals within the scope of this invention will be less than 6 and most often less than about 4.

As discussed supra, the transition metal aluminate crystals used in the present invention are three-layered, hexagonal with intermediate (or intercalated) layers of the MAZ moiety between layers of the hydrated alumina. The crystals are further identifiable by a-axis cell constants typically in the range of about 5.2—5.5 (direct) and c-axis cell constants typically in the range of about 20—50 (direct). It will be

understood, of course, that the a-axis and c-axis cell measurements will vary to some degree according to the particular MAZ compound and amount of MAZ compound in the crystal when formed.

In a given crystal, the MAZ may be eluted with an aqueous wash, taking care not to remove all the MAZ; then the crystal which is unloaded with respect to MAZ may be used in selectively taking up more of the same MAZ from aqueous solution. This property makes it possible to make a crystal to remove from solution any one compound of a transition metal selected from the group consisting of Cu, Zn, Mn, Fe, Co, and Ni. This property is demonstrated by example hereinafter and is particularly applicable when the crystal is deposited within the matrices of a reticular (esp. a microporous) ion exchange resin in bead or particulate form.

Furthermore, the negative radical (or anion) in a given crystal structure may be exchanged with a different negative radical (or anion) in aqueous solution, thus yielding additional or alternate novel forms of the transition metal aluminate structure. For example a crystalline $NiCl_2 \cdot 2Al(OH)_3$ may undergo anion exchange with different anions in aqueous solution, such as $NO_3^-$, to form $Ni(NO_3)_2 \cdot 2Al(OH)_3$ and/or $NiCl(NO_3) \cdot 2Al(OH)_3$, depending on the concentration of each in the aqueous medium.

Example 1 (Nickel aluminates)

For this example, the substrate employed is a macroporous anion exchange resin. It is a porous bead form of a cross-linked styrene-divinylbenzene polymer network having amine groups attached to the benzene rings and is in its chloride form (though the $OH^-$ form is usable). The resin has a porosity of about 30 percent and a surface area of about 40—50 $m^2$/g.

The resin beads are saturated with an excess of 32 percent $AlCl_3$ aqueous solution. The beads are then subjected to a flow of inert gas (viz. $N_2$) to remove excess $AlCl_3$ solution until the resin is substantially dry and free-flowing. A 75-g portion of the beads is treated with 200 ml of 30 percent aqueous $NH_3$ for about 15 minutes at ambient room temperature; this converts the $AlCl_3$ to amorphous $Al(OH)_3$ and forms soluble $NH_4Cl$ in the aqueous phase. The product is washed well with water to remove solubles and 98 ml of the resin, containing $Al(OH)_3$, is obtained. The resin is added to a 250 ml aqueous solution containing 25.5 g $NiCl_2 \cdot 6H_2O$ and 34 g of $NH_4Cl$. The resultant slurry is refluxed at atmospheric (ambient) pressure for 16 hours and 130 ml of resin composite is obtained; the gain in volume of the beads indicates that they are swelled. The product is identified by x-ray diffraction analysis as a hexagonal, three-layered, crystalline $NiCl_2 \cdot nAl(OH)_3 \cdot mH_2O$ with the $NiCl_2$ being the intermediate layer, expanding the crystalline $Al(OH)_3$ structure.

About 120 ml of the resin is loaded into a jacketed glass column and washed with deionized water (downflow) at 23 ml/min and 50°C, sampling the effluent in 50-ml cuts for $Ni^{++}$ analysis, as follows:

| Cut No. | $Ni^{++}$ conc. (g/l) |
|---|---|
| 1 | 0.965 |
| 2 | 1.503 |
| 3 | 2.850 |
| 4 | 3.420 |
| 5 | 1.905 |
| 6 | 1.050 |
| 7 | 1.033 |
| 8 | 0.830 |
| 9 | 0.652 |
| 10 | 0.499 |
| 11 | 0.355 |

The above wash substantially unloads the $NiCl_2$ from the resin, but not to the extent of allowing the $Al(OH)_3$ lattice to collapse and destroy the vacancies in the three-layer crystal.

The column is then operated downflow with 26 percent NaCl brine containing 0.5 g/l $Ni^{++}$ (as $NiCl_2$) at 23 ml/min and 50°C. Cuts of 10 ml each are taken of the effluent for $Ni^{++}$ analysis. Cuts 1—14 inclusive show zero $Ni^{++}$ content which indicates the $Ni^{++}$ in the brine is being retained in the crystal. $Ni^{++}$ breakthrough is detected in cut 15 (100 ml) as follows:

| Cut No. | Vol. (ml) | $Ni^{++}$ (g/l) |
|---|---|---|
| 15 | 100 | 0.070 |
| 16 | 100 | 0.100 |
| 17 | 100 | 0.430 |
| 18 | 100 | 0.390 |
| 19 | 100 | 0.390 |

The column is then operated again on water elution downflow at a rate of 23 ml/min at 50°C. The effluent is cut into 25-ml segments and each is analyzed for $Ni^{++}$ content, as follows:

| Cut No. | $Ni^{++}$ (g/l) |
|---|---|
| 1 | 0.390 |
| 2 | 0.390 |
| 3 | 0.388 |
| 4 | 0.415 |
| 5 | 2.37 |
| 6 | 4.725 |
| 7 | 2.700 |
| 8 | 2.300 |
| 9 | 1.675 |
| 10 | 1.280 |
| 11 | 1.100 |

The demonstrated ability of the crystal Ni aluminate to give up much of its $Ni^{++}$ values and then selectively re-absorb $Ni^{++}$ values is found in other aqueous solutions, such as brines containing other salts, e.g., $CaCl_2$, $MgCl_2$, KCl, and $SrCl_2$. Recovery of, e.g., $NiSO_4$ values from mine wastes or ore smelters or other mineral sources operates substantially in the same manner.

Whereas it is possible to prepare a large variety of concentrations of Al/Ni in the crystal and of Al/(amine nitrogen) of the crystal in the resin, the usual range appears to be about 1 to 2 moles for Al/Ni and about 0.5 to 3.0 moles for Al/(amine nitrogen).

In place of $NiCl_2$ values in the crystal described supra, one may also utilize $NiSO_4$ $Ni(NO_3)_2$, Ni-acetate, Ni-(citrate)$^{++/+++}$ and a wide variety of anion or negative radicals having a valence of 1, 2, or 3 and to use such $Ni^{++}$-deficient crystals to absorb such other Ni compounds.

Example 2 (Cobalt aluminates)

A cobalt aluminate crystalline material is prepared and tested as an absorber for $Co^{++}$ values substantially in accordance with the procedure shown in Example 1 for Ni aluminates.

The ion-exchange resin (the same as used in Example 1) is treated with excess 31 percent $AlCl_3$ solution and the excess blown out with $N_2$ to substantial dryness. An 85-g portion is added to 200 ml of 30 percent aqueous $NH_3$ and allowed to react for about 15 minutes, thus obtaining $Al(OH)_3$ in the resin; and the so-formed composite is washed well with water, obtaining about 112 ml of still-wet composite. This is added to an aqueous solution containing 30 g $CoCl_2 \cdot 6H_2O$ and 30 g $NH_4Cl$ in 250 ml $H_2O$ and refluxed at ambient pressure for 16 hours. The final pH is about 5.57 and the resin is found to be swelled to about a 145-ml volume. X-ray diffraction analysis shows the typical hexagonal, three-layered crystal.

A 116-ml portion of the so-formed resin composite is placed in a jacketed glass column and washed well with water to substantially reduce the $CoCl_2$ content of the crystal. A 26 percent NaCl brine containing 0.48 g $Co^{++}$/liter is downflowed through the resin bed at 22 ml/min and 50°C. The effluent is taken in 100-ml cuts (20 cuts in all), with analysis of some of the samples as follows:

| Cut No. | $Co^{++}$ (gm/l) |
|---|---|
| 7 | 0.05 |
| 12 | 0.15 |
| 16 | 0.28 |
| 17 | 0.29 |
| 18 | 0.29 |

The column is eluted with $H_2O$ downflow at 22 ml/min and 50°C with effluent taken in 25-ml cuts which are analyzed for $Co^{++}$ as follows:

| Cut No. | $Co^{++}$ (g/l) |
|---|---|
| 1 | 0.233 |
| 2 | 0.250 |
| 3 | 0.250 |
| 4 | 0.280 |
| 5 | 3.48 |
| 6 | 5.4 |
| 7 | 4.8 |
| 8 | 4.44 |
| 9 | 3.36 |
| 10 | 2.80 |
| 11 | 2.36 |
| 12 | 2.08 |
| 13 | 1.84 |

The chloride ion may be exchanged for other anions or negative radicals, e.g., $Br^-$, $SO_4^{--}$, $NO_3^-$, acetate, chloroacetate, oxalate, or citrate without altering the hexagonal configuration.

The crystalline $CoAZ''nAl(OH)_3 \cdot mH_2O$ is useful as a spinel precursor, as a source of $Co^{++}$ ion for use with aqueous medium containing $Co^{++}$ ores, $Co^{++}$ minerals, $Co^{++}$ waste streams, or $Co^{++}$ containing brines, by washing $Co^{++}$ values from the crystals, thus leaving vacancies in the crystals for taking up more $Co^{++}$ values.

Example 3 (Zinc aluminates)

For this example, the substrate employed is the same anion exchange resin used in Examples 1 and 2, except it is in the OH′ form. The resin-zinc aluminate preparation is carried out by loading 90 ml of resin with 1 mmole of $Al(OH)_3$/ml by equilibration with 30 percent $AlCl_3$ solution, drying until free flowing, reacting with excess 30 percent aqueous $NH_3$, heating with $NH_4Cl$ added and titrating with 135 meq of HCl to pH 5. The volume of resin composite at the end point is 139 ml. The resin is rinsed with 300 ml of $H_2O$ containing 60 g of zinc acetate dihydrate and heated in a 95°C oven for 4 days. Analysis by x-ray shows desirable Zn aluminate in acetate form along with some Bayerite and/or Norstrandite (this indicates that too much heating before the addition of zinc acetate, can prematurely transform some of the amorphous alumina hydrate to crystalline forms). The resin is washed, suspended in NaCl brine and titrated with 100 meq of NaOH as pH is kept below pH 7.0. The zinc hydrate precipitated outside the resin is washed out, 50 g of Zn acetate dihydrate is added, then the composite is heated in a 95°C oven. X-ray diffraction analysis indicates good crystals of the zinc acetate aluminate hydrate.

A 120-ml portion of the composite is placed in a glass column fitted for a jacket temperature control and the column is held at 65°C. A synthetic brine of 1 g Zn/liter is prepared by dissolving $ZnCl_2$ in 25 percent NaCl. This brine is pumped at 10 ml/min through the column. The resin shows 3.5 percent shrinkage but the column is filled again. This shrinkage occurs twice and the column is again filled. After 800 ml of the 0.0306 N Zn brine, the flow is changed to water at the same rate. Samples are collected for each and Zn content established by titration.

| Brine flow cc | Zn (g/l) | Water elution cc | Zn (g/l) or normality | |
|---|---|---|---|---|
| 1-100* | — | 1—50 | 0.032 | Normal |
| 2-100 | 0.005 N | 2—25 | 0.036 | g/l |
| 3-100 | 0.0065 | 3—25 | 0.032 | g/l |
| 4-100 | 0.0160 | 4—25 | 0.130 | g/l |
| 5-100 | 0.0170 | 5—25 | 0.228 | g/l |
| 6-100 | 0.0195 | 6—25 | 0.240 | g/l |
| 6-100 | 0.0275 | 7—25 | 0.224 | g/l |
| 8-100 | 0.0315 | 8—25 | 0.228 | g/l |
| | | 9—25 | 0.214 | g/l |
| | | 10—25 | 0.198 | g/l |

*discarded

The crystalline zinc aluminate in its chloride form has been identified by x-ray diffraction and its hexagonal structure has been closely defined. The chemical constitution is variable; a $(ZnCl)_x[Al(OH)_3]_m$-water wash will remove a portion of the $ZnCl_2$— and the $Cl^-$ may be exchanged for other anions without altering the crystal character.

Example 4 (Cu aluminates)

130 ml of the same resin used in Example 1 is rinsed, dried and added to excess 30 percent $AlCl_3$ solution. The excess $AlCl_3$ is removed at 87°C and the resin is dried to 98.73 g in a stream of $N_2$. The resin is treated with excess 30 percent aqueous $NH_3$ and then washed with water. The basic resin is added to a solution of 83 g $Na_2SO_4$ in 300 ml $H_2O$, heated to 50°—55°C, and 35 g $CuSO_4 \cdot 5H_2O$ is slowly added with the pH held at 4.0—4.5. Finally, it is heated at 100°C with the pH dropping to 3.8.

110 ml of this resin is placed in a jacketed glass column and saturated with $Cu^{++}$ by flowing a solution of 25 percent NaCl containing 1.0 g/l of $Cu^{++}$ (added as $CuSO_4 \cdot 5H_2O$) at 10 ml/min and 70°C. The $Cu^{++}$ is eluted with water at 10 ml/min and 70°C. The effluent is sampled and analyzed for $Cu^{++}$, as shown in the following table:

| Sample No. | Volume (ml) | $Cu^{++}$ in g/l |
|---|---|---|
| 6 | 50 | 0.65 |
| 7 | 25 | 0.95 |
| 8 | 23 | 7.4 |
| 9 | 25 | 11.2 |
| 10 | 25 | 5.6 |
| 11 | 25 | 3.0 |
| 12 | 25 | 2.2 |
| 13 | 25 | 1.6 |

The crystalline copper aluminate in its sulfate form has been identified by x-ray diffraction and its hexagonal structure has been closely defined. The chemical constitution is variable; a $(CuSO_4)_x[Al(OH)_3]_m$— water wash will remove a portion of the $CuSO_4$— and the $SO_4$ may be exchanged for other anions without altering the crystal character.

This microcrystalline copper aluminate is formed within the pores of macroporous anion exchange resin. The anion exchange resin is a cross-linked styrene-divinyl benzene polymer network to which is affixed $—CH_2N(CH_3)_2$ groups or

$$—CH_2N(CH_3)_3$$
$$|$$
$$OH$$

groups. These macroporous resins normally contain about 30—40 percent porosity and have a surface area of 40—50 $m^2/g$.

Such resin composites usually contain 0.8—3.0 moles Al/mole N and about 0.5—1.0 moles Cu/mole Al.

Example 5 (Mn aluminates)

90 ml of a macroporous anion exchange resin, which has been treated once with saturated $AlCl_3$, dried and then added to 30 percent aqueous $NH_3$ to precipitate the $Al(OH)_3$ within the pores of the resin, is wet with water under vacuum to displace all air, and then is titrated in the presence of $NH_4Cl$ with 130 meq of HCl to pH 5 at 80°C. Yield is 134 ml of the chloride form of the resin+$Al(OH)_3$. In about 300 ml total volume 50 g $MnCl_2 \cdot 4H_2O$ is added at 30°C, to pH 5.6. All is heated to 80°C and one normal NaOH is dripped in at constant pH 6.0. After 39.5 meq of NaOH a brown precipitate is observed. Then are added 10 meq HCl to pH 5.4 at 78°C. All of the dark precipitate does not dissolve and the sample is put into a 95°C oven overnight. By x-ray analysis there is found a small amount of $MnCl_2 \cdot nAl(OH)_3$ and Bayerite or Norstrandite. After three days it is washed, excess $NH_4OH$ added, then washed again; then is added NaCl plus excess $MnCl_2$, and heated to 75°C, with a resulting pH of 5.7. After 95°C oven heating overnight it gives good crystals of the aluminate in the resin.

In a glass-jacketed column is placed 110 ml of the resin and, at 65°C, pump first brine, then water at 10 ml/min.

The synthetic brine is prepared by dissolving 3.6024 g $MnCl_2/4H_2O$, 295 g NaCl in 885 g $H_2O$ to yield one liter containing 1.0 g Mn/liter. Samples are collected and analyzed for Mn.

| Brine | Cut | Vol cc | g Mn/liter |
|---|---|---|---|
| | 1 | 100 | — |
| | 2 | 100 | 0.8 |
| | 3 | 50 | 0.6 |
| | 4 | 50 | 0.65 |
| | 5 | 50 | 0.75 |
| | 6 | 50 | 0.75 |
| | 7 | 50 | — |
| | 8 | 50 | — |
| | 9 | 50 | 0.75 |
| To water | | | |
| | 10 | 50 | 0.90 |
| | 11 | 25 | 1.50 |
| | 12 | 25 | 7.70 |
| | 13 | 25 | 16.00 |
| | 14 | 25 | 15.00 |
| | 15 | 25 | 13.20 |
| | 16 | 25 | 12.50 |

The crystalline manganese aluminate in its chloride form has been identified by x-ray diffraction and its hexagonal structure has been closely defined. The chemical constitution is variable; a $(MnCl_2)_x[Al(OH)_3]_n$— water wash will remove a portion of the $MnCl_2$—and the $Cl^-$ may be exchanged for other anions without altering the crystal character.

This microcrystalline manganese aluminate is formed within the pores of a macroporous anion exchange resin. The anion exchange resin is a cross-linked styrene-divinyl benzene polymer network to which is affixed —$CH_2N(CH_3)_3$ groups or

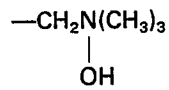

groups.

The resin composites prepared usually contain 0.8—3.0 moles Al/mole N and about 0.5—1.0 moles Mn/mole Al.

Example 6 (Fe aluminates)

A sample of macroporous anion exchange resin is equilibrated with 30 percent $AlCl_3$ solution, dried to free flowing, then added to excess aqueous 30 percent $NH_3$. After washing, 115 ml of the product is further treated.

A large amount of $NH_4Cl$ is added and the whole slurry is titrated with 50 meq HCl at 35°C to pH 7. About 300 cc of deionized $H_2O$ and 69.5 g $FeSO_4 \cdot 7H_2O$ are added and the sample placed into a 95°C oven. After 24 hours, and after cooling to 25°C the pH is 4.5. Some crystalline $FeSO_4 \cdot nAl(OH)_3$ is found by x-ray. The resin composite is washed with $H_2O$, slurried in excess $NH_4OH$ and washed again. The wet resin with 300 ml $H_2O$ and 69.5 g $FeSO_4 \cdot 7H_2O$, is again placed in a 95° oven. After an additional 24 hours, the resin is again washed with $NH_4OH$, then returned with 20.0 g $FeSO_4 \cdot 7H_2O$ to the 95°C oven for another 24 hours. The product is now well crystallized.

110 ml of the product are placed in a jacketed temperature controlled column, and synthetic brine and water are pumped through at 10 ml/min and 65°C. Samples are collected and titrated for Fe(+2). Feed brine is prepared by adding Fe(+2) to 1 g/liter in 25 percent NaCl[0.035 N Fe(+2)].

| Brine | Cut | Vol cc | Normality, in Fe |
|---|---|---|---|
| | 1 | 100 | Discarded |
| | 2 | 100 | 0.0015 |
| | 3 | 100 | 0.0030 |
| | 4 | 100 | 0.0030 |
| | 5 | 100 | 0.0120 |
| | 6 | 100 | 0.020 |
| | 7 | 100 | 0.023 |
| | 8 | 100 | 0.026 |
| | 9 | 100 | 0.0275 |
| | 10 | 85 | 0.0282 |
| $H_2O$ | | | |
| | 1 | 50 | 0.029 |
| | 2 | 50 | 0.134 |
| | 3 | 25 | 0.236 |
| | 4 | 25 | 0.188 |
| | 5 | 25 | 0.150 |
| | 6 | 25 | 0.128 |
| | 7 | 25 | 0.112 |
| | 8 | 25 | 0.102 |
| | 9 | 25 | 0.092 |
| | 10 | 25 | 0.084 |

**Claims**

1. A process for removing transition metal ions from an aqueous solution, said transition metal ions being selected from the group consisting of Cu, Zn, Mn, Fe, Co and Ni, said process comprising:

reacting said aqueous solution with a reticular ion exchange resin having incorporated therein a crystalline transition metal aluminate conforming generally to the formula:

$$MA_a^vZ_b^vnAl(OH)_3 \cdot mH_2O$$

where M is at least one divalent transition metal and is a metal sought to be recovered from said solution, selected from the group comprising Cu, Zn, Mn, Fe, Co, and Ni, where A and Z represent negative valence ions or radicals, v is a negative valence of 1, 2, or 3, a and b are each values of from zero to 2, with (va)+(vb) equal to 2, and m is an integer in the range of zero to maximum for waters of hydration, said transition metal aluminate initially being deficient in said transition metal ion such that n, the ratio of Al/M, is initially 2 or greater but not exceeding 4; and

continuing said reaction until said transition metal aluminate has become substantially enriched by transition metal ions identical to those originally incorporated in said resin from said aqueous solution, such that n is less than two.

2. The process of Claim 1, further comprising:

separating said ion exchange resin incorporating said transition metal aluminate from said aqueous solution; and

washing said resin with a solution that dissolves said transition metal ions from said aluminate such that n is greater than 2 but less than 4.

3. The process of Claim 1 or 2, wherein the crystallinity of the aluminate is identifiable by x-ray diffraction as being hexagonal having an a-axis cell constant in the range of 5.2—5.5 (direct) and a c-axis cell constant in the range of 20—50 (direct).

4. The process according to any of Claims 1—3, wherein the radicals or anions A and Z of the aluminate are selected from the groups consisting of hydroxyl, halide, organic and inorganic acid moieties having valences of from one to three, inclusive.

5. The process according to any of Claims 1—4, wherein the transition metal of the aluminate is only one metal selected from the group consisting of Cu, Zn, Mn, Fe, Co and Ni.

6. The process of Claim 1, wherein the resin has anion exchange functionalities.

7. A process according to Claim 1 using a reticular ion exchange resin having incorporated therein a transition metal aluminate prepared by the following steps: preparing in the presence of said reticular ion exchange resin a solution of an Al salt; increasing the pH of this solution by adding a non-interfering base in order to get amorphous hydrous alumina; mixing the amorphous hydrous alumina in the alkaline aqueous medium with the requisite transition metal compound, thus forming an adduct of the transition metal compound with the amorphous hydrous alumina, $Al(OH)_3$, such that the ratio of Al/M is between 2 and 4; heating the so-formed adduct to crystallization at a temperature in the range of 50°C to 150°C for a period of time from 1 hour to 100 hours; and recovering the so-formed reticular ion exchange resin with the incorporated transition metal aluminate.

**Patentansprüche**

1. Verfahren zum Entfernen von Übergangsmetallionen aus einer wäßrigen Lösung, wobei diese Übergangsmetallionen ausgewählt sind aus der Gruppe, bestehend aus Cu, Zn, Mn, Fe, Co und Ni, wobei dieses Verfahren die folgenden Schritte umfaßt: daß man die wäßrige Lösung mit einem netzförmigen Ionenaustauscherharz mit darin eingebautem kristallinem Übergangsmetall - Aluminat, das der folgenden allgemeinen Formel entspricht:

$$MA_a^vZ_b^vnAl(OH)_3 \cdot mH_2O$$

worin M mindestens ein divalentes Übergangsmetall ist und ein Metall ist, das aus der Lösung wiedergewonnen werden soll, ausgewählt aus der Gruppe, bestehend aus Cu, Zn, Mn, Fe, Co und Ni, worin A und Z negative Valenz-Ionen oder-Reste darstellen, v eine negative Valenz von 1, 2 oder 3 ist, a und b jeweils Werte von 0 bis 2 haben mit (va)+(vb) gleich 2 und m eine ganze Zahl im bereich von 0 bis zum Maximum für Hydratwasser ist, wobei das Übergangsmetallaluminat anfangs am Übergangsmetallion fehlt, so daß n, das Verhältnis von Al zu M, anfangs 2 oder mehr ist, aber 4 nicht übersteigt; umsetzt und die Reaktion fortsetz, bis das Übergangsmetallaluminat wesentlich angereichert ist, mit Übergangsmetallionen, die identisch sind mit den jenigen, die ursprünglich in das Harz aus der wäßrigen Lösung eingebaut waren, so daß n weniger als 2 ist.

2. Verfahren nach Anspruch 1, weiter umfassend, daß man das Ionenaustauschharz, das das Übergangsmetallaluminat eingebaut enthält, von der wäßrigen Lösung abtrennt und das Harz mit einer Lösung wäscht, die Übergangsmetallionen aus dem Aluminat löst, so daß n größer als 2 aber geringer als 4 ist.

3. Verfahren nach Anspruch 1 oder 2, worin die Kristallinität des Aluminats durch Röntgenbeugung identifiziert wird als Hexagonal mit einer a-Achsenzellkonstante im Bereich von 5,2 bis 5,5 (direkt) und einer c-Achsenzellkonstante im Bereich von 20 bis 50 (direkt).

4. Verfahren nach einem der Ansprüche 1 bis 3, worin die A- und Z-Reste des Aluminats ausgewählt sind aus den Gruppen, bestehend aus Hydroxyl, Halogenid, organischen oder anorganischen Säuregruppen mit Valenzen von 1 bis einschließlich 3.

5. Verfahren nach einem der Ansprüche 1 bis 4, worin das Übergangsmetall des Aluminats nur ein Metall ist, ausgewählt aus der Gruppe, bestehend aus Cu, Zn, Mn, Fe, Co und Ni.

6. Verfahren von Anspruch 1, worin das Harz Anionenaustauschfunktionalitäten hat.

7. Verfahren nach Anspruch 1, bei dem ein netzförmiges Ionenaustauschharz verwendet wird, das darin eingebaut ein Übergangsmetallaluminat hat, das hergestellt wurde durch die folgenden Schritte: daß man in Gegenwart des netzförmigen Ionenaustauschharzes eine Lösung eines Al-Salzes herstellt; den pH dieser Lösung durch Zugabe einer nicht interferierenden Base erhöht, um amorphes wasserhaltiges Aluminiumoxid zu erhalten; das amorphe wasserhaltige Aluminiumoxid in dem alkalischen wäßrigen Medium mit der erforderlichen Übergangsmetallverbindung mischt unter Bildung eines Adduktes der Übergangsmetallverbindung mit dem amorphen wasserhaltigen Aluminiumoxid AL(OH), so daß das Verhältnis von AL zu M zwischen 2 und 4 liegt; das so gebildete Addukt zur Kristallisation bei einer Temperatur im Bereich von 50°C bis 150°C über einen Zeitraum von 1 Stunde bis 100 Stunden erhitzt und das so gebildete netzförmige Ionenaustauschharz mit darin engeibautem Übergangsmetallaluminat wiedergewinnt.

**Revendications**

1. Procédé pour éliminer des ions de métaux de transition d'une solution aqueuse, lesdits ions de métaux de transition étant choisis dans le groupe comprenant Cu, Zn, Mn, Fe, Co, Ni, ledit procédé consistant:

à faire réagir ladite solution aqueuse avec une résine échangeuse d'ions réticulaire dans laquelle est incorporé un aluminate de métal de transition cristallin correspondant généralement à la formule suivante:

$$MA_a{}^vZ_b{}^vnAl(OH)_3 \cdot mH_2O$$

dans laquelle M est au moins un métal de transition divalent et est un métal que l'on cherche à récupérer dans ladite solution, choisi dans le groupe comprenant Cu, Zn, Mn, Fe, Co et Ni, où A et Z représentent chacun des ions ou des radicaux à valence négative, v est une valence négative égale à 1, 2 ou 3, a et b valent chacun de 0 à 2, avec (va)+(vb) égal à 2, et m est un entier compris entre 0 et le maximum correspondant à l'eau d'hydratation, ledit aluminate de métal de transition étant initialement déficient en ledit ion de métal de transition, de telle sorte que n, qui est le rapport Al/M, est au départ égal à 2 ou plus, mais ne dépasse pas 4; et

à poursuivre ladite réaction jusqu'à ce que ledit aluminate de métal de transition se soit considérablement enrichi en des ions de métaux de transition, identiques à ceux qui avaient été initialement incorporés dans ladite résine, provenant de ladite solution aqueuse, de façon que n soit inférieur à 2.

2. Procédé selon la revendication 1, consistant en outre à séparer de ladite solution aqueuse ledit aluminate de métal de transition incorporé dans ladite résine échangeuse d'ions, et à laver ladite résine avec une solution qui extrait par dissolution, dudit aluminate, lesdits ions de métaux de transition, de façon que n soit supérieur à 2 mais inférieur à 4.

3. Procédé selon la revendication 1 ou 2, dans lequel la structure cristalline de l'aluminate est identifiable, par diffraction de rayons X, comme étant hexagonale, présentant une constante de maille sur l'axe a comprise entre 5,2 et 5,5 (directe) et une constante de maille sur l'axe c comprise entre 20 et 50 (directe).

4. Procédé selon l'une quelconque des revendications 1 à 3, dans lequel les radicaux ou anions A et Z sont choisis dans les groupes comprenant les radicaux hydroxyle, halogénure, groupe acide organique ou minéral, ayant des valences comprises entre 1 et 3 inclus.

5. Procédé selon l'une quelconque des revendications 1 à 4, dans lequel ledit métal de transition de l'aluminate est un seul métal choisi dans le groupe comprenant Cu, Zn, Mn, Fe, Co et Ni.

6. Procédé selon la revendication 1, dans lequel la résine présente des fonctionnalités d'échanges d'anions.

7. Procédé selon la revendication 1, utilisant une résine échangeuse d'ions réticulaire dans laquelle est incorporé un aluminate de métal de transition, préparée par les étapes suivantes: préparation, en présence de ladite résine échangeuse d'ions réticulaire, d'une solution d'un sel de Al; augmentation du pH de cette solution par addition d'une base non interférente, pour obtenir une alumine hydratée amorphe; mélange de l'alumine hydratée amorphe, dans le milieu aqueux alcalin, avec le composé du métal de transition requis, puis formation d'un produit d'addition du composé du métal de transition avec l'alumine hydratée amorphe $Al(OH)_3$, de façon que le rapport Al/M soit compris entre 2 et 4; chauffage du produit d'addition ainsi formé jusqu'à cristallisation à une température comprise entre 50 et 150°C sur un laps de temps compris entre 1 heure et 100 heures; et récupération de la résine échangeuse d'ions réticulaire ainsi formée, avec, incorporé, l'aluminate de métal de transition.